(19) Europäisches Patentamt
European Patent Office
Office européen des brevets

(11) **EP 3 527 356 A1**

(12) **EUROPÄISCHE PATENTANMELDUNG**

(43) Veröffentlichungstag:
**21.08.2019 Patentblatt 2019/34**

(21) Anmeldenummer: **19155390.8**

(22) Anmeldetag: **04.02.2019**

(51) Int Cl.:
*B29C 65/52* (2006.01)        *B29C 65/54* (2006.01)
*B29C 65/00* (2006.01)        *B29C 65/78* (2006.01)
*B62D 27/02* (2006.01)        *B62D 29/00* (2006.01)
*B29L 31/30* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **15.02.2018 DE 102018103382**

(71) Anmelder: **Carbon Truck & Trailer GmbH**
**21684 Stade (DE)**

(72) Erfinder:
• **Schulte, Benedikt**
**22765 Hamburg (DE)**

• **Bade, Markus**
**22081 Hamburg (DE)**
• **Kühl, Hauke**
**21107 Hamburg (DE)**
• **Kalkoffen, Gerret**
**22085 Hamburg (DE)**
• **Hadamus, Jan**
**20259 Hamburg (DE)**

(74) Vertreter: **Raffay & Fleck**
**Patentanwälte**
**Grosse Bleichen 8**
**20354 Hamburg (DE)**

(54) **LASTEINLEITUNGSVORRICHTUNG UND VERFAHREN ZUR VERKLEBUNG EINER LASTEINLEITUNGSVORRICHTUNG**

(57)    Die Erfindung betrifft eine Lasteinleitungsvorrichtung und Verfahren zur Verklebung einer Lasteinleitungsvorrichtung für Faserverbundwerkstoffe.

Aufgabe der Erfindung ist es, die Lasteinleitungsvorrichtung der EP 2 888 153 A1 und das Verfahren zur Verklebung zu verbessern. Dabei soll beispielsweise eine definiertere Kavität und/oder die Verwendung niedrig viskoser Klebstoffe auch an vertikalen Flächen ermöglicht werden.

Gelöst wird die Aufgabe durch Verwendung eines Dichtmittels, insbesondere eines ersten Klebstoffs zur Schaffung eine Kavität und Schaffung einer fixierten Anordnung für die Injektion von Klebstoff in die Kavität.

Fig. 2

EP 3 527 356 A1

**Beschreibung**

Die Erfindung betrifft eine Lasteinleitungsvorrichtung und ein Verfahren zur Verklebung einer Lasteinleitungsvorrichtung für Faserverbundwerkstoffe. Lasteinleitungsvorrichtungen zur Einleitung von Kräften in Faserverbundwerkstoffe sind aus dem Stand der Technik zahlreich bekannt, beispielsweise aus der DE 10 2015 219 719 A1 oder der EP 2 888 153 A1.

Auch ist es aus der DE102004001386 B3, der DE102008058390 A1 und der DE102008058389 A1 ist es bekannt, eine abgesehen von einer Überlauföffnung und einer Injektionsöffnung vollständig umschlossene Kavität zu füllen, bis Klebstoff die Überlauföffnung ausgefüllt oder aus dieser ausgetreten ist.

Aufgabe der Erfindung ist es, die Lasteinleitungsvorrichtung der EP 2 888 153 A1 und das Verfahren zur Verklebung zu verbessern. Dabei soll beispielsweise eine definiertere Kavität und/oder die Verwendung niedrigviskoser Klebstoffe auch an vertikalen Flächen ermöglicht werden. Insbesondere soll eine Lasteinleitungsvorrichtung ermöglicht werden, die einteilig zwei Kanten umgreift. Beispielsweise ermöglicht eine im Querschnitt U-förmige Klebefläche die zumindest teilweise Umschließung eines Faserverbundwerkstoffträgers an drei Seiten. Insbesondere soll auch eine genaue Positionierung und eine definierte und einfache Klebstoffverteilung ermöglicht werden. Zusätzlich oder alternativ ist es Aufgabe der Erfindung, ein Material sparendes und einfaches Verfahren anzugeben, dass dennoch reproduzierbare Verklebungen mit hoher Qualität ermöglicht.

Gelöst wird die Aufgabe durch ein Verfahren nach Anspruch 1 und durch ein Verfahren nach Anspruch 2, eine Verwendung nach Anspruch 11, eine Lasteinleitungsvorrichtung nach Anspruch 12 und ein System aus Lasteinleitungsvorrichtung und Faserverbundwerkstück nach Anspruch 15.

Die Lösung unterscheidet sich dabei auch vom Verfahren des Injektionsklebens, das bereits aus anderen Gebieten der Technik bekannt ist, beispielsweise aus DE102012012298A1. Durch die zusätzliche Fixierung können nicht nur höhere Injektionsdrücke verwendet und dadurch schnellere Injektionen und zuverlässigere Verklebungen erreicht werden. Auch die genauere Positionierung, Anordnung und Größe der Kavität können dadurch erreicht werden. Insbesondere bei der Verwendung eines ersten Klebstoffs als Dichtmittel können längere Aushärtungszeiten auch ohne weitere konstruktive Vorkehrungen in Kauf genommen werden und die verklebten Teile auch vor dem Aushärten des injizierten Klebstoffs bewegt werden. Darüber hinaus lassen sich komplizierte Konturen der Klebeflächen unproblematisch umsetzten. Auch können zwischen den zu verklebenden Teilen auftretende Kräfte beim Positionieren der Teile vor der Verklebung, wie sie beispielsweise bei der Verwendung von elastischen Dichtelementen zwischen den Teilen auftreten können, vermieden werden, wenn beispielsweise eine Sicke und/oder ein erster Klebstoff als Dichtmittel verwendet wird.

Sofern auf ein Dichtmittel und/oder Begrenzungen, insbesondere umlaufende oder die Klebstoffausbreitung zu den Rändern der Lasteinleitungsvorrichtung und/oder Klebefläche begrenzende Begrenzungen, verzichtet wird kann eine besonders einfache Injektion durchgeführt werden, die insbesondere wenig Vorbereitung erfordert und/oder ein besonders leichtes, Ressourcen schonendes und günstiges Produkt ermöglicht. So lässt sich eine sehr effiziente Verfahrensführung und ein sehr effizientes Produkt angeben. Der Klebeprozess kann deutlich vereinfacht und beschleunigt werden und die Vorbereitung erfordert weniger Materialeinsatz und weniger Zeit und weniger Arbeit.

Dieses Verfahren erlaubt es zudem, das Design der Lasteinleitungsvorrichtung zu optimieren und diese leichter aber dadurch auch komplizierter, insbesondere mit einem höheren Rand zur Fläche Verhältnis auszugestalten, ohne den Aufwand für die Verklebung deutlich zu erhöhen. Durch solche Ausgestaltungen der Lasteinleitungsvorrichtung lassen sie die Lasten und/oder Kräfte bei geringerem oder gleichem Gewicht der Lasteinleitungsvorrichtung besser, verteilter und/oder gleichmäßiger (im Sinne auf einen größeren Bereich, nicht unbedingt größere Klebefläche, verteilt) in den Faserverbundwerkstoff einleiten bzw. lässt sich das Gewicht der Lasteinleitungsvorrichtung reduzieren.

Besonders bionisch ausgestaltete Lasteinleitungsvorrichtungen lassen sich mit dem Verfahren einfach, schnell und Material sparend verkleben. Diese Steigerung der Effizienz, reduzierter Materialeinsatz, reduziertes Gewicht, geringere Kosten, vereinfachter und leicht händisch und automatisiert ausführbarer Klebeprozess sind Vorteile dieses Verfahrens.

Besonders bevorzugt wird eine Lasteinleitungsvorrichtung wenn ihre Kontur, die Kontur mindestens einer ihrer Seiten, bei gewölbten Klebeflächen und/oder Klebeteilfläche insbesondere betrachtet in abgewickelter Darstellung oder in einer Projektion, in der die Klebefläche oder Klebeteilfläche maximal groß ist, die Kontur der Lasteinleitungsvorrichtung, der Klebefläche und/oder Klebeteilfläche und/oder die Länge der Kontur des Klebstoffs zum Quadrat im Verhältnis zu seiner/ihrer Fläche (im Folgenden auch Maßzahl M) größer als 18, insbesondere größer als 25, insbesondere größer als 40, insbesondere größer als 60, insbesondere größer als 115, ist

Insbesondere erfüllen diese Anforderung die Lasteinleitungsvorrichtung und der zur Verklebung der Lasteinleitungsvorrichtung verwendete Klebstoff und/oder erfüllen diese Anforderung mindestens eine zur Verklebung verwendete Seite der Lasteinleitungsvorrichtung und der zur Verklebung dieser Seite verwendete Klebstoff.

Die Kontur und die Fläche wird bei ebenen Klebeflächen und/oder Klebeteilflächen insbesondere betrachtet senkrecht jeweils zu den ebenen Klebeflächen und/oder Klebeteilflächen und/oder im abgewickelter Darstellung und/oder bei gewölbten Klebeflächen und/oder Klebeteilflächen insbesondere betrachtet, in abgewickelter Darstellung und/oder in einer Projektion, in der die Klebefläche oder Klebeteilfläche maximal groß ist. Lasteinleitungsvorrichtungen mit mehreren zu einander gewinkelt angeordneten oder mit Kanten zwischen ihnen angeordneten Klebeteilflächen, insbesondere bei Knicken von 50° oder mehr, können gedanklich an diesen Kanten geteilt werden und die sich dann ergebenen Teile separat betrachtet werden. Insbesondere erfüllen mindestens 50% der sich ergebenen Teile und/oder 50% der Klebefläche und/oder Lasteinleitungsvorrichtungsfläche die Anforderungen an die Maßzahl M. Mit besonderem Vorteil erfüllt die Lasteinleitungsvorrichtung, alle Teile und/oder mindestens einer der Teile die Anforderung an die Maßzahl auch ohne und/oder nur hälftiger Berücksichtigung der sich durch die Teilung ergebenden Kanten die an die Maßzahl M gestellte Anforderung.

Bei abgewickelter Darstellung werden die sich durch das Abwickeln ergebenen Schnitte nicht als Kontur berücksichtigt. Abzuwickeln ist insbesondere so, dass alle zur Verklebung verwendeten Flächen und/oder alle Klebeteilflächen auf einer gemeinsamen euklidischen Ebene zu liegen kommen und/oder die Lasteinleitungsvorrichtung alle zur Verklebung verwendeten Flächen und diese verbindenden Flächen und/oder alle Klebeteilflächen und diese verbindenden und/oder aller zum Faserverbundwerkstück zugewandten Flächen der Lasteinleitungsvorrichtung auf einer gemeinsamen euklidischen Ebene zu liegen kommen.

Bei der Kontur wird nicht nur die äußere Kontur betrachtet, sondern auch der Anteil der Kontur, der durch Aussparungen gebildet wird. Insbesondere werden als Aussparung auch solche Abschnitte oder Flächenteile der Lasteinleitungsvorrichtung betrachtet, die die nicht vom Klebstoff berührt werden und deren Material dünner, insbesondere mindestens 20%, insbesondere mindestens 50% dünner ausgebildet ist, als der Teil der Lasteinleitungsvorrichtung, der mit Klebstoff in Berührung steht und/oder dessen durchschnittliche Dicke. Bei einer vorteilhaften Ausbildung der Lasteinleitungsvorrichtung in Bezug auf die Maßzahl aus Kontur zum Quadrat durch Fläche ist es insbesondere unschädlich, wenn die Aussparungen durch dünne Materialstücke oder -abschnitte verblendet ist. Derartige Verblendungen, die nur unwesentlich zur Stabilität der Verklebung und/oder der Lasteinleitungsvorrichtung beitragen, werden bevorzugt als Aussparungen betrachtet und erhöhen somit die Kontur und erniedrigen die Fläche.

Betrachtet man mit der genannten Maßzahl (im Folgenden M), Kontur zum Quadrat zu Fläche einige Flächen erlangt man folgende Werte:

Rechteck mit Kantenlängen a und b:

$$M = (2a + 2b)^2/(a * b)$$

Unter der Annahme a = b erhält man:

$$M = 16a^2/a^2 = 16$$

Unter der Annahme a = 4b erhält man:

$$M = 100b^2/4b^2 = 25$$

Kreis mit Radius r:

$$(2 * pi * r)^2/(pi * r^2) = 4 * pi \sim 12,5$$

Halbkreis mit Radius r:

$$M = ((pi * r) + (2 * r))^2/(0,5 * pi * r^2) = (2 + pi)^2 * r^2/(0,5 * pi * r^2)$$

$$= 2 * (2 + pi)^2/pi \sim 14$$

Ring mit Innenradius r1 und Außenradius r2:

$$M = (2 * pi * (r1 + r2))^2/(pi * (r2 - r1)^2) = 4 * pi * (r1 + r2)^2/(r2 - r1)^2$$

Unter der Annahme r2 = 2 * r1 erhält man:

$$\text{Mit } r2 = 2 * r1$$

$$4 * pi * 9 * r1^2/r1^2 = 36 * pi$$

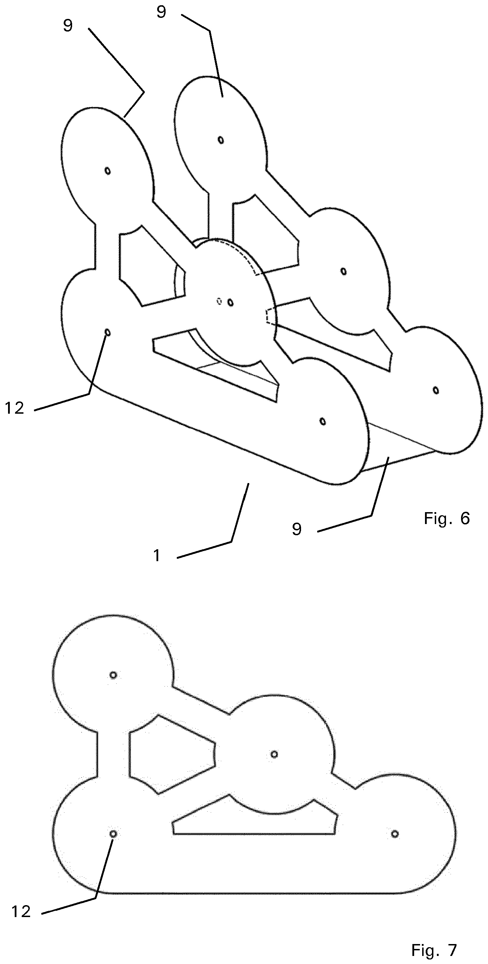

Betrachte man die in Fig.7 gezeigte Seite der komplexeren Lasteinleitungsvorrichtung erhält man M = 57,9, betrachtet man die in Fig. 6 gezeigte Lasteinleitungsvorrichtung insgesamt erhält man M = 76,5. Bei Betrachtung einer Seite aber ohne die untere (Biege-)Kante, die mit dem Rest der Lasteinleitungsvorrichtung verbunden ist, als Kontur anzusehen, erhält man M = 42,1.

Mit besonderem Vorteil können Verbindungen zwischen zur Verklebung verwendeten Bereichen oder Teilflächen der Lasteinleitungsvorrichtung mit größerer Materialstärke ausgebildet.

Mit besonderem Vorteil weist die mindestens eine, insbesondere mindestens zwei Seiten der Lasteinleitungsvorrichtung eine Erstreckung in beide Richtungen zwischen 10 und 200 cm und/oder weist die Lasteinleitungsvorrichtung eine Klebefläche oder Summe der Klebeteilflächen zwischen 0,1 und 0,3 m^2 auf. Mit besonderem Vorteil weist die Lasteinleitungsvorrichtung in zwei Raumrichtungen jeweils eine Erstreckung zwischen 10 und 200 cm auf und/oder weist sie in die dritte Raumrichtung eine Erstreckung zwischen 5 und 50 cm auf.

Die Erfindung wird unter anderem durch ein Verfahren zur Verbindung mindestens eines Faserverbundwerkstücks, insbesondere eines Längsträgers eines Fahrzeuges, mit einer Lasteinleitungsvorrichtung, insbesondere einer metallischen Lasteinleitungsvorrichtung, gelöst, beinhaltend:

a. Bereitstellen mindestens eines Faserverbundwerkstücks, und Bereitstellen einer Lasteinleitungsvorrichtung aufweisend mindestens eine Klebefläche,

b. Positionieren der Lasteinleitungsvorrichtung relativ zu dem mindestens einen Faserverbundwerkstück so, dass sich mindestens eine Kavität zwischen dem mindestens einen Faserverbundwerkstück und der mindestens einen Klebefläche der Lasteinleitungsvorrichtung ergibt, und Fixieren der Anordnung von Faserverbundwerkstück und Lasteinleitungsvorrichtung, derart, dass die Anordnung geeignet ist, einem ersten Druck in der Kavität für mindestens eine erste Zeitspanne und/oder einer ersten Injektionsbelastung durch Injizieren von Klebstoff in die Kavität, insbesondere ohne dauerhafte und/oder temporäre Veränderung der Anordnung, zu widerstehen,

c. Injizieren von Klebstoff mit mindestens einem zweiten Druck in mindestens einer zweiten Zeitspanne in die Kavität, insbesondere durch eine Aussparung oder eine Mehrzahl von Aussparungen, insbesondere Bohrungen in der Lasteinleitungsvorrichtung,

i. bis der Klebstoff eine, insbesondere vorgesehene, Ausbreitung erreicht, die, insbesondere zumindest teilweise, insbesondere an mindestens 10% der Kontur der Klebstoffausdehnung in der Kavität und/oder der Kontur Lasteinleitungsvorrichtung, durch die Kontur der Lasteinleitungsvorrichtung und/oder in der Lasteinleitungsvorrichtung angeordnete Kontrollaussparungen, insbesondere Bohrungen, definiert ist, dieser entspricht und/oder zu dieser parallel ist, insbesondere in Aufsicht auf den Faserverbundwerkstoff, und/oder

ii. bis eine Klebstoffmenge injiziert ist, die zu einer, insbesondere vorgesehenen, Ausbreitung des Klebstoffs führt, die, insbesondere zumindest teilweise, insbesondere an mindestens 10% der Kontur der Klebstoffausdehnung in der Kavität und/oder der Kontur Lasteinleitungsvorrichtung, durch die Kontur der Lasteinleitungsvorrichtung und/oder in der Lasteinleitungsvorrichtung angeordnete Kontrollaussparungen, insbesondere Bohrungen, definiert ist, dieser entspricht und/oder zu dieser parallel ist, insbesondere in Aufsicht auf den Faserverbundwerkstoff, und/oder

iii. wobei die Ausbreitung des Klebstoffs zwischen Faserverbundwerkstoff und Lasteinleitungsvorrichtung, insbesondere nicht durch Lasteinleitungsvorrichtung, Faserverbundwerkstoff und/oder andere Mittel, behindert und/oder begrenzt wird

und bis die Kavität zumindest zu 50% mit Klebstoff gefüllt ist, wobei der mindestens eine zweite Druck den ersten Druck und die zweite Zeitspanne die erste Zeitspanne nicht übersteigt oder die Belastung durch das Injizieren die erste Injektionsbelastung nicht übersteigt und das Fixieren der Anordnung von Faserverbundwerkstück und der Lasteinleitungsvorrichtung zumindest für die Dauer des Injizierens durch Festlegen der Lasteinleitungsvorrichtung, zumindest in Bezug auf die Kräfte, die durch die Injektion ausgeübt werden, relativ zum Faserverbundwerkstück durch externe Mittel, insbesondere mindestens einen Roboterarm, mindestens ein Spannmittel und/oder mindestens eine Halteklammer, mindestens ein Haltemittel und/oder mindestens ein Andruckmittel, erfolgt.

Die Kontur der Klebstoffausdehnung wird insbesondere in abgewickelter Darstellung der Lasteinleitungsvorrichtung oder in Aufsicht auf die Lasteinleitungsvorrichtung und/oder die jeweils betrachtete Seite der Lasteinleitungsvorrichtung und/oder Klebefläche und/oder Klebeteilfläche und/oder senkrecht zur Klebstoffausbreitung an der jeweiligen Stelle betrachtet. Die sich durch das Abwickeln ergebenen Schnitte sind dabei nicht als Kontur zu betrachten.

Die Kontur stellt somit insbesondere zu jeder Zeit ab Eintritt des Klebstoffs in die Kavität insgesamt oder pro Injektion, Injektionsöffnung, Klebeteilfläche und/oder Aussparung, durch die eine Injektion stattfindet eine geschlossene oder zwei Linien dar, die sich durch die Injektion verlängern/vergrößern und/oder ihre Abstand voneinander vergrößern und/oder den Klebstoff innerhalb der Kavität umrahmen. Bei dieser Betrachtung sind durch das vollständige Umfließen von Hindernissen, das insbesondere zur Berührung von mindestens zwei Konturabschnitten geführt hat, entstandene Linien der Kontur und/oder solche Linien der Kontur, die auch Konturen eines Hindernisses sind, außer Acht zu lassen. Durch die Berührung von Klebstoffmengen untereinander, und oder durch das Umfließen von Hindernissen, die durch unterschiedliche Injektionsöffnungen injiziert wurden, kann sich im Laufe der Injektion die Anzahl der Linien, durch die die Kontur gebildet werden, verändern.

Die Kontur kann an Begrenzungen anliegen, oder jenseits der Klebstoffausbreitung und/oder außen nicht an einer Begrenzung anliegen. Insbesondere liegt die Kontur zu keiner Zeit vollständig an einer Begrenzung an. Insbesondere liegt die Kontur am Ende der Injektion und/oder zu jeder Zeit maximal über 50% ihrer Erstreckung an einer Begrenzung an.

Insbesondere wird die Kavität nur zu maximal 95% ihrer Erstreckung und/oder ihres Volumen mit Klebstoff gefüllt.

Insbesondere wird nur soviel und/oder solange Klebstoff injiziert und/oder wird Klebstoff so injiziert, dass der Klebstoff die Kavität nicht verlässt, nicht in eine Belüftungsöffnung, Kontrollöffnung und/oder Überlauföffnung eintritt und/oder keine solche füllt und/oder aus keiner solchen austritt.

Darunter, dass die Ausbreitung des Klebstoffs zwischen Faserverbundwerkstoff und Lasteinleitungsvorrichtung, insbesondere nicht durch Lasteinleitungsvorrichtung, Faserverbundwerkstoff und/oder andere Mittel, behindert und/oder begrenzt wird, wird insbesondere verstanden, dass diese nicht dahin gehend begrenzt wird, dass der Klebstoff sich in keine Richtung weiter zwischen Faserverbundwerkstoff und Lasteinleitungsvorrichtung ausbreiten kann.

Insbesondere ist die Ausbreitung des Klebstoffs in einer, insbesondere zwei Raumrichtungen, insbesondere pro Klebeteilfläche, zu keiner Zeit und/oder am Ende der Injektion nicht begrenzt und/oder behindert. Dabei sind die zwei Raumrichtungen insbesondere senkrecht zueinander angeordnet. Behindert wird die Ausbreitung beispielsweise durch lokale Ausfüllungen oder ein lokales Hindernis in der Kavität, insbesondere mit Ausdehnungen von weniger als 2 cm und/oder 80%, insbesondere weniger als 60%, der Ausdehnung der Kavität in die jeweilige Richtung, die vom Klebstoff umflossen werden kann. Begrenzt wird die Ausbreitung beispielsweise durch eine, beispielsweise mauerartige, Begrenzung der Kavität, die nicht umflossen werden kann.

Gelöst wird die Aufgabe auch durch eine Lasteinleitungsvorrichtung, die die Anforderungen bezüglich der Maßzahl, wie oben geschildert, erfüllt.

Die Erfindung wird unter anderem durch ein Verfahren zur Verbindung mindestens eines Faserverbundwerkstückes, insbesondere eines Trägers, insbesondere eines Fahrzeug-Längs- und/oder Querträgers, mit einer Lasteinleitungsvorrichtung, insbesondere einer metallischen Lasteinleitungsvorrichtung realisiert. Das Verfahren beinhaltet dabei den Schritt des Bereitstellens mindestens eines Faserverbundwerkstücks und das Bereitstellen einer Lasteinleitungsvorrichtung, die mindestens eine Klebefläche aufweist. Die Lasteinleitungsvorrichtung kann dabei unterschiedlich ausgebildet sein. Sie ist zum Einleiten von Lasten, also beispielsweise Kräfte, in das Faserverbundwerkstück geeignet. Eine Lasteinleitungsvorrichtung kann beispielsweise dazu benutzt werden, eine Achse an einen Fahrzeug-Längsträger aus Faserverbundwerkstoff anzubinden. Das Faserverbundwerkstück ist insbesondere durch ein Pultrusionsverfahren hergestellt und/oder weist insbesondere einen über seine Länge konstanten Querschnitt auf.

Das Verfahren beinhaltet des Weiteren den Schritt des Positionierens der Lasteinleitungsvorrichtung relativ zu dem mindestens einen Faserverbundwerkstück unter Verwendung mindestens eines Dichtmittels. Das Positionieren erfolgt dabei so, dass sich mindestens eine Kavität, insbesondere mit einem Kavitätsvolumen, zwischen dem mindestens einen Faserverbundwerkstück und der mindestens einen Klebefläche der Lasteinleitungsvorrichtung ergibt. Eine Kavität kann vollständig umschlossen sein. Sie kann aber auch Öffnungen, insbesondere mindestens einen, insbesondere umlaufenen, offenen Bereich aufweisen. Ein Spalt der durch die Positionierung einer Klebefläche einer Lasteinleitungsvorrichtung über einer Fläche eines Faserverbundwerkstück ergibt, kann somit ebenfalls eine Kavität darstellen.

Eine Klebefläche ist dabei insbesondere geeignet mit Klebemittel benetzt zu werden, um mit dem Klebemittel die Lasteinleitungsvorrichtung mit dem Faserverbundwerkstück zu verbinden. Insbesondere ist eine Klebefläche eben ausgeführt. Insbesondere weist eine Klebefläche keine Knicke oder Kanten auf.

Die Kavität, die beim Positionieren unter Verwendung des mindestens einen Dichtmittels entsteht, weist insbesondere n Bereiche auf, an denen das Kavitätsvolumen nicht durch die mindestens eine Klebefläche der Lasteinleitungsvorrichtung und das mindestens eine Faserverbundwerkstück begrenzt ist. Dabei ist n gleich eins oder größer und ist die Länge, insbesondere senkrecht zur jeweiligen kürzesten Verbindungslinie zwischen Faserverbundwerkstück und Klebefläche der Lasteinleitungsvorrichtung gemessen, der n Bereiche zusammen mindestens 5 cm lang.

Das Positionieren erfolgt dabei insbesondere auch so, dass die n Bereiche zumindest über 90 % der gemeinsamen Länge der n Bereiche vom mindestens einen Dichtmittel verschlossen sind.

Dabei ist die Kavität insbesondere abgesehen von den n Bereichen verschlossen und somit abgesehen von den n Bereichen vollständig vom Faserverbundwerkstück und von der Lasteinleitungsvorrichtung umschlossen, wobei die Lasteinleitungsvorrichtung oder das Faserverbundwerkstück entweder Öffnungen zum Injizieren und/oder Entlüften aufweisen kann, aber nicht muss.

Das Dichtmittel ist dabei in Kontakt mit dem mindestens einen Faserverbundwerkstück und der Lasteinleitungsvorrichtung, insbesondere mit der mindestens einen Klebefläche der Lasteinleitungsvorrichtung. Der Kontakt kann dabei erst durch das Positionieren hergestellt werden und/oder vorher schon bestehen, beispielsweise kann das Dichtmittel schon vorher mit der Lasteinleitungsvorrichtung und/oder dem Faserverbundwerkstück verbunden und/oder Teil der Lasteinleitungsvorrichtung und/oder des Faserverbundwerkstücks sein. Dies wäre beispielsweise durch eine Sicke der Lasteinleitungsvorrichtung gegeben, die dann in Kontakt mit dem Faserverbundwerkstück gebracht wird. So kann das Dichtmittel auch durch formschlüssige und/oder ineinandergreifende und/oder komplementäre Geometrien, beispielsweise eine Sicke oder mehrere Sicken und/oder Vertiefungen, insbesondere auch formschlüssige und/oder ineinandergreifende und/oder komplementäre Geometrien des Faserverbundwerkstück und/oder Lasteinleitungsvorrichtung erreicht werden, die dann insbesondere miteinander in Kontakt gebracht werden. Dabei kann es auch ausreichen, dass Faserverbundwerkstück oder Lasteinleitungsvorrichtung an einer ebenen Stelle mit einer entsprechenden Geometrie des anderen von Faserverbundwerkstück und Lasteinleitungsvorrichtung, beispielsweise einer Sicke in Kontakt gebracht wird und ggf. eine ausreichende Kraft zum Zusammendrücken aufgebracht wird. Es kommt darauf an, dass eine entsprechende Kavität geschaffen wird, die in den verschlossenen Teilen der n Bereiche (zumindest 90% der gemeinsamen Länge der n Bereiche) einen Austritt von Klebstoff beim Injizieren verhindert, weitgehend verhindert oder zumindest hemmt, insbesondere so hemmt, dass ein zuverlässiges Füllen der Kavität mit Klebstoff durch Injizieren ermöglicht ist und/oder erreicht wird.

Auch wird die Anordnung vom Faserverbundwerkstück und der Lasteinleitungsvorrichtung fixiert, derart, dass die Anordnung geeignet ist, einem ersten Druck in der Kavität für mindestens eine erste Zeitspanne ohne Trennen und insbesondere ohne dauerhafte oder insbesondere auch ohne temporäre Veränderung der Anordnung, zu widerstehen. Unter einer temporären Veränderung ist eine über eine Zeitspanne zu verstehen, die kleiner ist als die Abbindzeit, Verarbeitungszeit und/oder Aushärtezeit des Klebers. Das Fixieren kann dabei auf unterschiedliche Arten erreicht werden. So kann beispielsweise als Dichtmittel ein Klebstoff verwendet werden und das Fixieren durch Aushärten des Klebstoffs erreicht werden. Auch kann durch externe Mittel, beispielsweise Roboter, Rahmen, Haltemittel und/oder Andruckmittel, eine Fixierung der Anordnung erreicht werden Auch kann das Fixieren durch Anformungen, weitere Bauteile und anderes, durch Versteifen und/oder Kombination dieser Maßnahmen erfolgen. Es muss sich nicht um ein absolutes und nicht um ein dauerhaftes Fixieren handelt, es ist ausreichend, wenn es die genannten Anforderungen erfüllt.

Das Verfahren beinhaltet auch den Schritt des Injizierens von Klebstoff mit mindestens einem zweiten Druck in mindestens einer zweiten Zeitspanne in die Kavität, bis die Kavität zumindest zu 50 % mit Klebstoff gefüllt ist, wobei der mindestens zweite Druck den ersten Druck und die mindestens eine zweite Zeitspanne, insbesondere jede einzelne und/oder alle gemeinsam, die erste Zeitspanne nicht übersteigt. Dabei kann die Injektion die Injektion auch mehrfach unterbrochen werden und/oder durch mehrere Injektionsöffnungen zeitgleich und/oder zweitversetzt erfolgen. Der mindestens eine zweite Druck kann durch verschiedene Drücke über den Zeitverlauf und/oder verschiedene Injektionen gegeben sein. Insbesondere übersteigt keiner der zweiten Drücke den ersten Druck. Insbesondere wird für den anspruchsgemäßen vergleich der höchste. Mit besonderem Vorteil oder alternativ übersteigt die Belastung durch den mindestens einen zweiten Druck in der mindestens einen zweiten Zeitspanne nicht die Belastung, die fixierte Anordnung des mindestens einen Faserverbundwerkstücks und der mindestens einen Lasteinleitungsvorrichtung ohne Trennen und insbesondere ohne dauerhafte oder insbesondere auch ohne temporäre Veränderung der Anordnung standhält. Gerade darin liegt der Zweck des Verhältnisses der Drücke und Zeitspannen.

Mit besonderem Vorteil wird die mindestens eine Klebefläche vollständig mit Klebemittel zur Verbindung mit dem mindestens einen Faserverbundwerkstück, insbesondere durch die Injektion, und/oder Dichtmittel benetzt und/oder bedeckt.

Mit besonderem Vorteil beträgt die Höhe der Kavität 0,1 bis 6 mm, besonders bevorzugt 1 bis 6 mm. Dabei ist die Höhe insbesondere gemessen entlang der jeweiligen kürzesten Verbindungslinie, insbesondere am Ort der Bestimmung der Höhe, zwischen Klebefläche der Lasteinleitungsvorrichtung und dem Faserverbundwerkstück. Insbesondere ist sie senkrecht zur Klebefläche der Lasteinleitungsvorrichtung und/oder der Oberfläche des Faserverbundwerkstücks gemessen. Mit besonderem Vorteil ist die Kavitätshöhe zumindest über 90 % der mindestens einen Klebefläche, zumindest annähernd, konstant.

Mit besonderem Vorteil sind die mindestens n Bereiche nicht vollständig verschlossen und weist die Kavität mindestens eine, insbesondere mindestens zwei Öffnungen insbesondere in den n Bereichen auf. Die Kavität ist insbesondere, abgesehen von diesen Öffnungen und/oder Öffnungen zum Injizieren und/oder Belüften der Kavität, insbesondere in der Lasteinleitungsvorrichtung und/oder den n Bereichen, insbesondere verschlossen.

Mit besonderem Vorteil liegt der erste und/oder zweite Druck zwischen 1 und 10 bar, insbesondere zwischen 5 und 10 bar. Der zweite Druck kann im Volumenstrom konstant sein und/oder schwanken. Mit besonderem Vorteil beträgt die Länge der ersten und/oder der zweiten Zeitspanne 1 Sekunde bis 1 Stunde.

Mit besonderem Vorteil erfolgt die Verwendung von Dichtmittel durch Einbringen von Dichtmittel und/oder durch Vorsehen von Sicken an der Lasteinleitungsvorrichtung. Sicken können beispielsweise als Nuten, Erhebungen, Vorsprung und/oder Prägung ausgebildet sein, insbesondere als Teil der Lasteinleitungsvorrichtung und/oder integral mit dieser ausgebildet sein, beispielsweise aus dem gleichen Material und/oder in einem Herstellungsprozess gefertigt sein. Die Höhe der Sicken beträgt insbesondere 0,1 bis 6 mm, besonders bevorzugt 1 bis 6 mm. Bei nachgiebigen, beispielsweise elastischen, Sicken werden diese so gewählt, dass diese angedrückt bzw. komprimiert, insbesondere nach dem Fixieren, insbesondere eine Höhe von 0,1 bis 6 mm aufweisen. Die Höhe wird insbesondere gemessen senkrecht zur, insbesondere benachbarten, insbesondere angrenzenden Klebefläche. Insbesondere erfolgt das Einbringen von Dichtmittel durch Anordnen mindestens einer länglichen Dichtung, insbesondere entlang der Außenkontur der mindestens einen Klebefläche der Lasteinleitungsvorrichtung. Dabei kann es sich beispielsweise um ein elastisches Dichtelement handeln. Dabei kann die Außenkontur der Klebefläche auch durch die Anordnung der länglichen Dichtung definiert werden. Dies ist beispielsweise dann der Fall, wenn eine größere ebene Fläche vorliegt und davon ein Teil durch das Anordnen der länglichen Dichtung abgesondert wird. Die Außenkontur der Klebefläche kann aber auch durch die Form der Lasteinleitungsvorrichtung definiert sein, beispielsweise durch Kanten, Enden, Erhebungen und/oder Vertiefungen der Lasteinleitungsvorrichtung.

Insbesondere erfolgt das Fixieren der Anordnung von Faserverbundwerkstück und Lasteinleitungsvorrichtung durch äußerliches Aufbringen einer das Dichtmittel komprimierenden Kraft auf die Lasteinleitungsvorrichtung und/oder das Faserverbundwerkstück, zumindest für die Dauer des Injizierens und/oder durch Festlegen der Lasteinleitungsvorrichtung relativ zum Faserverbundwerkstück, zumindest in Bezug auf die Kräfte, die durch die Injektion ausgeübt werden. Die Kräfte, die durch die Injektion ausgeübt werden, sind insbesondere von der Kavität nach außen gerichtet. So kann es beispielsweise in manchen Anordnungen ausreichen, eine Kraft senkrecht zur Klebefläche der Lasteinleitungsvorrichtung auf das Faserverbundwerkstück auszuüben, um eine anspruchsgemäße Fixierung zu erreichen.

Mit besonderem Vorteil erfolgt das Einbringen von Dichtmittel durch Einbringen oder Auftragen von Klebstoff. Dabei wird dieser Klebstoff, der als Dichtmittel eingebracht oder aufgetragen wird, auch als erster Klebstoff bezeichnet und der durch Injektion in die Kavität eingebrachte Klebstoff als zweiter Klebstoff. Mit besonderem Vorteil erfolgt das Fixieren der Anordnung von Faserverbundwerkstück und Lasteinleitungsvorrichtung durch zumindest teilweises Aushärten des ersten Klebstoffs unter Schaffung einer starren Verbindung zwischen Faserverbundwerkstück und der Lasteinleitungsvorrichtung, wobei die Verbindung geeignet ist, dem ersten Druck der mindestens ersten Injektion in der Kavität für mindestens die erste Zeitspanne ohne Lösen der Verbindung, insbesondere ohne bleibende, insbesondere auch ohne temporäre, Veränderung der Anordnung, zu widerstehen. Dabei erfolgt das Aushärten zumindest so weit und/oder so lange, dass die genannte Bedingung erfüllt wird.

Mit besonderem Vorteil wird zum Positionieren der Lasteinleitungsvorrichtung relativ zu dem mindestens einen Faserverbundwerkstück mindestens ein Abstandshalter verwendet, der zwischen dem mindestens einen Faserverbundwerkstück und der mindestens einen Lasteinleitungsvorrichtung angeordnet ist und/oder wird. Dabei kann der Abstandshalter Teil des Dichtmittels sein und/oder insbesondere in einem der n Bereiche angeordnet werden und/oder sein. Der Abstandhalter kann auch durch eine Sicke gebildet werden und/oder Teil dieser sein. Durch einen solchen Abstandshalter kann, insbesondere wenn als Dichtmittel ein erster Klebstoff verwendet wird, ein definierter Abstand zwischen Lasteinleitungsvorrichtung und Faserverbundwerkstück und somit eine definierte Höhe der Kavität erreicht werden. Mit besonderem Vorteil werden mindestens drei Abstandshalter verwendet. Mit besonderem Vorteil wird der mindestens eine Abstandshalter mit der Lasteinleitungsvorrichtung verklemmt und/oder verklebt oder integral mit dieser ausgeführt. Ein Abstandshalter ist insbesondere geeignet einen durch seine Ausdehnung definierten Mindestabstand zu bewirken, indem er zumindest teilweise zwischen Faserverbundwerkstück und Lasteinleitungsvorrichtung angeordnet wird. Er ist insbesondere in mindestens einer, insbesondere aller, seiner Erstreckungen steif ausgebildet. Mit besonderem Vorteil werden und/oder sind mindestens drei Abstandshalter so angeordnet, dass diese nicht auf einer gemeinsamen Gerade angeordnet sind und/oder werden. Mit besonderem Vorteil werden mindestens drei Abstandshalter so angeordnet oder sind so angeordnet, dass sie auf und/oder an unterschiedlichen Klebeflächen und/oder Klebeteilflächen, insbesondere an unterschiedlichen, insbesondere nicht parallelen, Ebenen der mindestens einen Klebefläche angeordnet sind und/oder werden. Mit besonderem Vorteil weist mindestens einer der Abstandshalter mindestens eine Öffnung für die Injektion von Klebstoff und/oder das Entweichen von dem sich vor der Injektion in der Kavität befindenden Medium, insbesondere Gas, insbesondere Luft, durch ihn hindurch auf. Mit besonderem Vorteil ist der mindestens eine Abstandshalter am Rand der mindestens einen Klebefläche angeordnet. Mit besonderem Vorteil ist der mindestens eine Abstandshalter so ausgebildet, dass er eine maximale Erstreckung, insbesondere Breite, insbesondere in Richtung der Länge der n Bereiche, insbesondere in Richtung einer insbesondere benachbarten, Begrenzungslinie der mindestens einen Klebefläche, von maximal 10 cm, insbesondere maximal 5 cm und/oder dass er in einem Querschnitt senkrecht zur kürzesten Verbindungslinie zwischen Lasteinleitungsvorrichtung und Faserverbundwerkstück durch den Abstandshalter hindurch und/oder parallel zu der mindestens einen, insbesondere angrenzenden, Klebefläche eine Querschnittsfläche von 1 mm$^2$ bis 10 cm$^2$ aufweist.

Mit besonderem Vorteil wird während des Injizierens des zweiten Klebstoffs eine Entlüftung der Kavität ermöglicht und/oder durchgeführt, insbesondere durch einen oder mindestens einen der nicht verschlossenen Teile der mindestens n Bereiche und/oder durch eine luftdurchlässigen Öffnung in einem Abstandshalter und/oder der Lasteinleitungsvorrichtung. Mit besonderem Vorteil werden nach dem Injizieren die n Bereiche und/oder die Kavität vollständig verschlossen, insbesondere mit mindestens einem Stopfen. Ein Verschließen der Kavität nach Injizieren des zweiten Klebstoffes erfolgt dann, wenn die vor dem Injizieren bestehende Kavität an allen Außenbereichen verschlossen wird. Mit besonderem Vorteil findet das Injizieren statt, während in der Kavität im noch nicht durch Klebstoff gefüllten Volumen ein Druck von weniger als 35 bar herrscht und/oder beginnt das Injizieren bei einem Druck von weniger als 500 mbar in der Kavität. Mit besonderem Vorteil erfolgt das Injizieren so, dass Luft in der Kavität und/oder in einer mit der Kavität luftdurchlässig verbundenen Entlüftungskavität, die insbesondere Teil der Lasteinleitungsvorrichtung ist, komprimiert wird. Ein luftdurchlässiges Verbinden kann durch eine einfache Öffnung aber auch durch eine Membran oder ähnliche Anordnungen realisiert werden. Um ein solches Injizieren zu ermöglichen, weist die Lasteinleitungsvorrichtung insbesondere eine Entlüftungskavität auf, die luftdurchlässig mit der Kavität und/oder mit der mindestens einer Klebefläche der Lasteinleitungsvorrichtung verbunden ist.

Mit besonderem Vorteil sind mindestens drei Öffnungen der Kavität vorgesehen und erfolgt das Injizieren als Staffelinjektion, sodass, wenn eine Fließfront des Klebstoffes, der durch eine erste Öffnung injiziert wird, eine zweite Öffnung erreicht und/oder einen Bereich mit einer Ausdehnung von bis zu 50 mm um die zweite Öffnung erreicht die Injektion durch die erste Öffnung beendet wird und die Injektion durch die zweite Öffnung und/oder eine dritte Öffnung fortgesetzt wird, bis eine Fließfront des durch die zweite Öffnung injizierten Klebstoffs eine dritte Öffnung oder einen Bereich mit einer Ausdehnung von bis zu 50 mm um die dritte Öffnung erreicht und/oder eine Fließfront des durch die dritte Öffnung injizierten Klebstoffs die zweite Öffnung und/oder einen Bereich mit einer Ausdehnung von bis zu 50 mm um die zweite Öffnung erreicht. Ein Bereich mit einer Ausdehnung von bis zu 50 mm um eine Öffnung ist definiert durch das Volumen einer Kugel mit Mittelpunkt in der Mitte der Öffnung und einem Radius von 50 mm, das innerhalb der Kavität liegt. Es wird also definiert durch Schnittmenge des Volumens der Kavität und einer solchen Kugel.

Durch eine solche Staffelinjektion kann insbesondere bei langgestreckten Kavitäten und/oder großen Kavitäten eine zuverlässige Injektion und Verklebung, insbesondere auch bei möglichst geringen Injektionsdrücken, ermöglicht werden. Mit besonderem Vorteil wird das Verfahren bei Anwendung einer Staffelinjektion so durchgeführt, dass eine, insbesondere jede, Öffnung, durch die die Injektion beendet wird, verschlossen wird, insbesondere durch mindestens einen Stopfen.

Insbesondere wird die erste Öffnung verschlossen, wenn die Fließfront des Klebstoffs die zweite Öffnung erreicht und/oder einen Bereich mit einer Ausdehnung von bis zu 50 mm um die zweite Öffnung erreicht hat. Mit besonderem Vorteil wird das Verfahren bei Anwendung einer Staffelinjektion so durchgeführt, dass es mehrfach hintereinander wiederholt wird, insbesondere mit fortlaufenden Öffnungen. So kann eine Staffelinjektion durch eine Vielzahl von Öffnungen durchgeführt werden und insbesondere eine große Kavität vollständig mit Klebstoff gefüllt werden, während die Staffelung die mögliche Gesamtverarbeitungszeit zur Durchführung der mindestens einen Injektion des Verfahrens bei gegebener Verarbeitungszeit einer Klebstoffmenge gegenüber nur eine Injektion oder einer ungestaffelten Injektion deutlich erhöht.

Mit besonderem Vorteil wird als Lasteinleitungsvorrichtung eine erfindungsgemäße Lasteinleitungsvorrichtung verwendet. Mit besonderem Vorteil weist eine Lasteinleitungsvorrichtung eine Anbindungsstruktur auf, insbesondere zum Anschweißen und/oder Anschrauben von weiteren Elementen.

Insbesondere können Öffnungen sowohl als Entlüftungs- und auch als Injektionsöffnung verwendet werden. So kann beispielsweise eine Entlüftung auch durch eine Öffnung erfolgen, durch die zugleich oder zu einem unterschiedlichen Zeitpunkt eine Injektion durchgeführt wird.

Insbesondere kann eine Sicke auch als Fixierung eingesetzt werden. Durch eine Sicke, die beispielsweise als Prägung, Nut, Buchse und oder Nocke ausgeführt ist, kann eine Fixierung einer Lasteinleitungsvorrichtung erfolgen, insbesondere wenn die Lasteinleitungsvorrichtung und/oder ihre Klebefläche durch ein dünnes, insbesondere blechartiges, Element gebildet ist.

Insbesondere ist die Lasteinleitungsvorrichtung einteilig oder aus mindestens zwei Komponenten, beispielsweise stoffschlüssig miteinander verbunden, ausgeführt. Insbesondere sind zumindest die Klebeflächen der Lasteinleitungsvorrichtung, insbesondere die, die zur Verklebung mit einem Faserverbundwerkstück verwendet werden, gemeinsam einstückig und insbesondere steif ausgeführt.

Gelöst wird die Aufgabe auch durch die Verwendung eines ersten Dichtmittels, insbesondere eines ersten Klebstoffs, für eine Injektionsverklebung mindestens zweier Teile mittels Injizieren eines zweiten Klebstoffs mit einem Injektionsdruck, wobei das erste Dichtmittel zur zumindest weitgehend starren Positionierung der mindestens zwei Teile, Schaffung einer Verbindung der mindestens zwei Teile und Schaffung einer Kavität zwischen den mindestens zwei Teilen für die anschließende Injektionsverklebung mit dem zweiten Klebstoff verwendet wird, wobei das erste Dichtmittel so verwendet wird, dass das erste Dichtmittel in Kontakt mit beiden Teilen kommt und so gewählt ist und/oder bevor der zweite Klebstoff in die Kavität injiziert wird soweit fixiert, insbesondere versteift und/oder ausgehärtet, ist oder wird, dass die Kavität und/oder das erste Dichtmittel dem Injektionsdruck, insbesondere ohne bleibende, insbesondere ohne temporäre, Veränderung, standhält und wobei es sich bei dem mindestens zwei Teilen um mindestens ein Faserverbundwerkstück und mindestens eine, insbesondere metallische oder Sandwich-Struktur, Lasteinleitungsvorrichtung, insbesondere eine erfindungsgemäße Lasteinleitungsvorrichtung handelt.

Dabei und generell kann das Dichtmittel wie oben beschrieben gewählt und/oder ausgeführt sein. Insbesondere kann es durch eine Sicke, ein elastisches Dichtelement, insbesondere eine lang gestreckte Dichtung, und/oder einen ersten Klebstoff gebildet sein. Auch bezüglich der Lasteinleitungsvorrichtung gilt insbesondere oben Ausgeführtes. Bezüglich des Injektionsdrucks und allen anderen Merkmalen gilt vorteilhafterweise oben Ausgeführtes auch für die Verwendung, die Lasteinleitungsvorrichtung und das System.

Gelöst wird die Aufgabe auch durch eine Lasteinleitungsvorrichtung zur Lasteinleitung in mindestens ein Faserverbundwerkstück in mit dem Faserverbundwerkstück verklebten Zustand in das Faserverbundwerkstück, wobei die Lasteinleitungsvorrichtung mindestens eine Klebefläche zur Verklebung mit dem Faserverbundwerkstück mittels Klebstoff aufweist und dadurch gekennzeichnet ist, dass mindestens eine Vorrichtung zur Injektion von Klebstoff durch die Lasteinleitungsvorrichtung, das mindestens eine Faserverbundwerkstück und/oder den mindestens einen Abstandshalter und ihre Klebefläche hindurch vorgesehen ist und/oder mindestens ein Abstandshalter umfasst ist. In Bezug auf den Abstandshalter und die Lasteinleitungsvorrichtung gilt vorteilhafterweise oben Ausgeführtes.

Mit besonderem Vorteil ist die erfindungsgemäße Lasteinleitungsvorrichtung und/oder die Lasteinleitungsvorrichtung des Verfahrens, des Systems und/oder der Verwendung so ausgeführt, dass die mindestens eine Klebefläche mindestens zwei Klebeteilflächen umfasst, die insbesondere einander gegenüberliegend angeordnet sind und/oder zwischen denen die mindestens eine Klebefläche mindestens einen, insbesondere mindestens zwei, Winkel und/oder Kanten aufweist und/oder einschließt, insbesondere jeweils mit Winkelweiten zwischen 60 und 120° und/oder insbesondere um parallele Achsen und/oder insbesondere mit gegengleichen Drehrichtungen und/oder insbesondere in Form von Nachbarwinkeln. Durch eine derartige Ausgestaltung wird es ermöglicht, durch die Lasteinleitungsvorrichtung beispielsweise zwei Kanten des Faserverbundwerkstücks zu umgreifen, beispielsweise wird eine im Querschnitt U-förmige Umschließung und Verklebung ermöglicht. So kann der Faserverbundwerkstücks beispielsweise an drei Seiten zumindest teilweise durch die Lasteinleitungsvorrichtung umschlossen werden.

Insbesondere werden Klebeflächen, die auf einer gemeinsamen Ebene und/oder einer gemeinsamen regulären Fläche liegen als eine Klebeteilfläche angesehen, auch wenn sie nicht vollflächig, zum Beispiel an mehreren Stellen, die nicht zusammenhängen verklebt werden. So werden beispielsweis runde Klebeflächen, die in einer Ebene liegen und durch Stege verbunden sind, wie dies bei einer Seite wie in Figur 7 gezeigt ist der Fall ist, als eine Klebefläche angesehen, auch wenn an den Stegen kein Klebstoff vorgesehen wird. Umschließt die Klebeteilfläche mehr als 50° Raumwinkel, ist insbesondere pro 50° umschlossener Raumwinkel und die Klebeteilfläche jeweils nach 50° umschlossenem Raumwinkel in eine weitere Klebeteilfläche zu unterteilen

eine neue Projektion zu wählen

Mit besonderem Vorteil ist mindestens eine mit mindestens einer Klebeteilfläche und/oder der mindestens einen Klebefläche so in Verbindung stehende und so ausgebildete Entlüftungskavität beinhaltet, dass Luft von der mindestens einen Klebeteilfläche und/oder Klebefläche in die Entlüftungskavität gedrückt werden und in dieser komprimiert werden kann, insbesondere bis zu einem Druck von mindestens 3 bis 10 bar, insbesondere 5 bis 10 bar. Durch eine solche Ausgestaltung kann eine Entlüftung auch ohne nach außen offene Öffnung der Kavität ermöglicht werden.

Gelöst wird die Aufgabe auch durch ein System beinhaltend mindestens ein Faserverbundwerkstück und eine Lasteinleitungsvorrichtung, insbesondere eine erfindungsgemäße, zur Lasteinleitung in das mindestens ein Faserverbundwerkstück, wobei das mindestens eine Faserverbundwerkstück und die Lasteinleitungsvorrichtung durch eine Verklebung mit einem Klebstoffvolumen verbunden sind, wobei die Oberfläche des Klebstoffvolumens an einem ersten Teil der Oberfläche des Klebstoffvolumens von dem mindestens einen Faserverbundwerkstück und an einem zweiten Teil der Oberfläche des Klebstoffvolumens von der Lasteinleitungsvorrichtung teilweise begrenzt ist und an einem dritten Teil der Oberfläche frei liegt umgeben ist und wobei der dritte Teil mindestens 50%, insbesondere mindestens 80%, insbesondere 95%, eines Differenzwerts beträgt, insbesondere im Wesentlichen oder vollständig gleich dem Differenzwert ist, wobei sich der Differenzwert aus der der Oberfläche des Klebstoffvolumens abzüglich des ersten Teils der Oberfläche des Klebstoffvolumens und abzüglich des zweiten Teils der Oberfläche des Klebstoffvolumens und insbesondere abzüglich der Oberfläche des Klebstoffvolumens, die vom Klebstoffvolumen, dem Faserverbundwerkstoff und der Lasteinleitungsvorrichtung zusammen vollständig umschlossen ist, ergibt.

Die Verbindung ist dabei insgesamt insbesondere steif und insbesondere nicht lösbar. Dies kann durch die zweite Verklebung allein oder durch das erste Verbindungsmittel und durch die zweite Verklebung realisiert werden. Das erste Verbindungsmittel kann somit auch alleine eine Verbindung im Sinne einer Überbrückung und/oder Berührung des Faserverbundwerkstücks und der Lasteinleitungsvorrichtung darstellen. Dabei umfasst eine Berührung auch die gemeinsame einteilige Ausbildung mit Faserverbundwerkstück und/oder Lasteinleitungsvorrichtung.

Insbesondere gelten für die Lasteinleitungsvorrichtung, das Faserverbundwerkstück, das Verbindungsmittel, das Dichtmittel, die Verklebung und andere Merkmale insbesondere die oben ausgeführten vorteilhaften Ausprägungen.

Eine erfindungsgemäße Lasteinleitung Vorrichtung oder eine Lasteinleitungsvorrichtung des Verfahrens, der Verwendung und/oder des Systems kann teilweise gekantet, tiefgezogen, gekrümmt (konvex und/oder konkav) ausgebildet sein. Sie kann insbesondere zur Anbindung an ein Achsaggregat, einen Triebkopf, einen Vorderwagen, einen Anhänger, eine Bodenplatte, einen Unterboden, einen Waggon, eine Traktionsbatterie und/oder für sonstige im Kraftfahrzeug, Schienenfeahrzeugm Sonderfahrzeugbau, und/oder im "gezogenen" Bereich übliche Systeme und Komponenten ausgebildet und/oder dafür Anbindungsmöglichkeiten aufweisen.

Weitere vorteilhafte Ausführungen der Erfindung sollen rein exemplarisch nicht beschränkend anhand der folgenden Figur erläutert werden. Dabei zeigen:

Fig. 1: einen Querschnitt durch eine Anordnung einer Lasteinleitungsvorrichtung und eines Faserverbundwerkstücks,

Fig. 2: einen Querschnitt durch eine weitere Anordnung einer Lasteinleitungsvorrichtung und eines Faserverbundwerkstücks,

Fig. 3 eine Veranschaulichung der Verklebung ohne Dichtmittel,

Fig. 4 eine Veranschaulichung unterschiedlicher Dichtmittel,

Fig. 5 eine Veranschaulichung der Lenkung des Klebemittels durch einen Abstandshalter,

Fig. 6 eine Veranschaulichung einer Lasteinleitungsvorrichtung mit zwei Seiten und

Fig. 7 eine Normalansicht auf eine der Seiten der Lasteinleitungsvorrichtung aus Fig. 6.

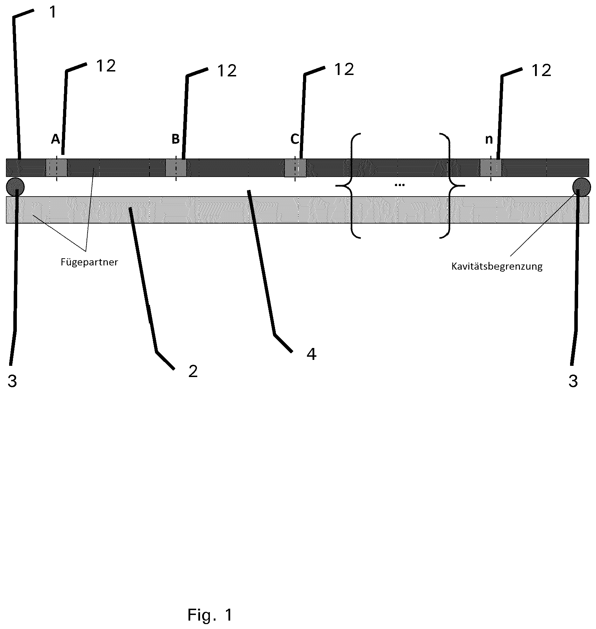

Fig. 1 zeigt eine Lasteinleitungsvorrichtung 1 und ein Faserverbundwerkstück aus Faserverbundwerkstoff 2 sowie Verbindungsmittel 3, hier als elastische, langgestreckte, runde Dichtung ausgeführt. Zwischen der Lasteinleitungsvorrichtung, die nach unten orientierte Klebeflächen aufweist, und dem Faserverbundwerkstücks ist eine Kavität 4 ausgebildet. Diese ist oben von der Lasteinleitungsvorrichtung und unten vom Faserverbundwerkstück begrenzt. Der sich ergebene Spalt wird nach außen hin durch die Dichtung 3 verschlossen. Die Lasteinleitungsvorrichtung weist Injektions- und/oder Entlüftungsöffnungen A, B, C bis n auf. Die geschweiften Klammern deuten an, dass hier mehrere Öffnungen angeordnet aber nicht gezeichnet sind, sich also zwischen der Öffnung C und n weitere Öffnungen befinden. Vor einer Injektion, insbesondere zuerst durch die Öffnung A, kann von oben Druck auf die Lasteinleitungsvorrichtung ausgeübt werden, so dass die Anordnung fixiert wird. Wenn die Fließfront des Klebstoffes, der durch die Öffnung A injiziert wird, die Öffnung B erreicht, wird die Injektion durch Öffnung A gestoppt und eine Injektion durch Öffnung B fortgesetzt, bis der Klebstoff die Öffnung C erreicht. Dann wird die Injektion durch Öffnung C durchgeführt, bis die nächste Öffnung erreicht wird, und so weiter bis der Klebstoff die Öffnung n erreicht.

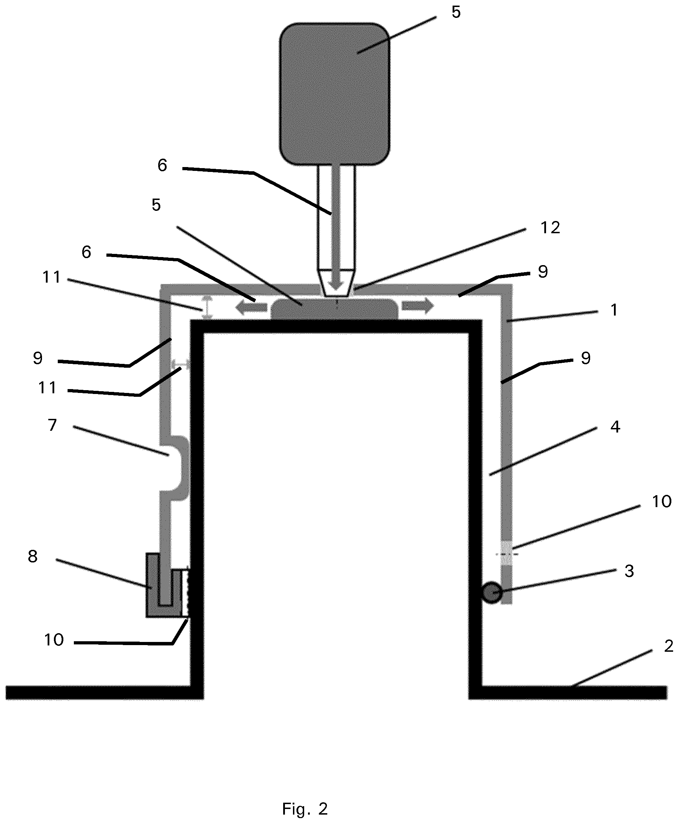

Figur 2 zeigt eine Lasteinleitungsvorrichtung 1 aufweisend drei Klebeteilflächen 9, die im Querschnitt U-förmig angeordnet sind und ein Faserverbundwerkstück 2, dass von der Lasteinleitungsvorrichtung an drei Seiten zumindest teilweise umschlossen wird, sowie Verbindungsmittel 3, hier als elastische, langgestreckte, runde Dichtung ausgeführt und von einem Abstandshalter 8 mit Entlüftungsöffnung 10 unterbrochen. Zwischen der Lasteinleitungsvorrichtung 1 und dem Faserverbundwerkstück 2ist eine Kavität 4 ausgebildet. Diese ist oben von der Lasteinleitungsvorrichtung und vom Faserverbundwerkstück begrenzt. Der sich ergebene Spalt wird nach außen hin durch die Dichtung 3 verschlossen. Die Höhe 11 der Kavität ist an der oberen größer als an den seitlichen Klebeteilflächen 9. Die Lasteinleitungsvorrichtung 1 weist eine Sicke 7 zur Einstellung der Höhe 11 der Kavität auf. Die Höhe 11 der Kavität wird auch bestimmt durch die Dichtung 3 und den Abstandshalter 8. Die Höhe der Kavität an der oberen Klebeteilfläche 9 ist durch in der Darstellung nicht gezeigte Abstandshalter eingestellt. Die hier gewählte Anordnung bedarf auf Grund Ihrer Geometrie zur Fixierung ausschließlich eines ausreichenden Drucks von oben auf die Lasteinleitungsvorrichtung bei entsprechendem Gegenlager unter dem Faserverbundwerkstück. Dargestellt ist Klebstoff 5, der in Richtung der durch Pfeile veranschaulichten Klebstoffausbreitung 6 durch eine Injektionsöffnung 12 der Lasteinleitungsvorrichtung 1 in die Kavität 4 injiziert wird. Die Sicke 7 erstreckt sich dabei nicht über die gesamt Erstreckung der Lasteinleitungsvorrichtung 1 senkrecht zur Zeichnungsebene, was das Umfließen der Sicke durch Klebstoff ermöglicht.

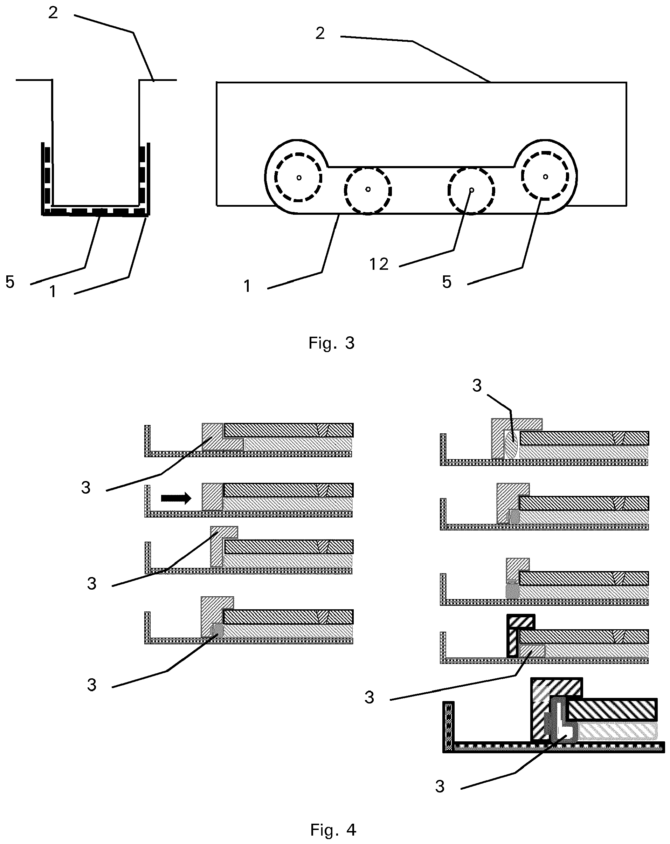

Figur 3 zeigt ein im Querschnitt Omega-förmiges Faserverbundwerkstück (2) links im Querschnitt und rechts in Aufsicht auf die in der linken Darstellung rechte sich von oben nach unten erstreckende Seitenwand. An dem Faserverbundwerkstück (2) ist mit Abstand eine Lasteinleitungsvorrichtung (1) angeordnet. In die dazwischen befindliche Kavität wurde Klebstoff (5) durch neun Injektionsöffnungen in Form von Bohrungen durch die Lasteinleitungsvorrichtung injiziert. Von den Injektionsöffnungen befinden sich jeweils vier auf einer Seite, von denen eine in der rechten Darstellung gezeigt ist und eine unten im die beiden Seiten der Lasteinleitungsvorrichtung verbindenden Fläche.

Die Klebstoffinjektionen wurden auf den Seiten bei den beiden äußeren Injektionsöffnungen so durchgeführt, dass sich der Klebstoff ungehindert in der Kavität ausbreiten konnte und sich seine Kontur in weiten Teilen parallel zur Kontur der Lasteinleitungsvorrichtung erstreckt. Die Klebstoffinjektionen wurden auf den Seiten bei den beiden mittleren Injektionsöffnungen so durchgeführt, dass sich der Klebstoff zumindest in alle Richtungen ungehindert in der Kavität ausbreiten konnte und je an einer Stelle (oben) tangential an die Kontur der Lasteinleitungsvorrichtung heranreicht, mit dieser in diesem Punkt übereinstimmt. Auch nach unten hin kann sich der Klebstoff ungehindert ausbreiten, er wird gegebenenfalls um 90° umgelenkt, die Ausbreitung endet vor der Umlenkung oder er vereinigt sich mit dem durch die auf der angrenzenden Fläche angeordneten Injektionsöffnung injizierten Klebstoff, sodass sich eine gemeinsame Kontur ergibt, die sich aber unbehindert ausbreiten kann.

Figur 4 veranschaulicht links beispielhaft unterschiedliche Ausführungen von Dichtelementen, die insbesondere umlaufend um die Kontur der Klebefläche und/der Lasteinleitungsvorrichtung angebracht werden. Gezeigt sind immer ein Faserverbundwerkstück (unten), eine Lasteinleitungsvorrichtung (oben), Klebstoff (zwischen Faserverbundwerkstück und Lasteinleitungsvorrichtung) sowie eine Dichtung und teilweise ein Rahmen. In der obersten Darstellung ist ein Dichtelement, insbesondere elastisch, zu erkennen, dass sich zwischen das Faserverbundwerkstück und die Lasteinleitungsvorrichtung erstreckt und dort durch Andrücken der Lasteinleitungsvorrichtung in Richtung des Faserverbundwerkstück fixiert werden kann. In der Darstellung darunter ist ein Dichtelement, insbesondere elastisch, zu erkennen, von außen an die Lasteinleitungsvorrichtung angedrückt wird. In der Darstellung darunter ist ein Dichtelement, insbesondere elastisch, zu erkennen, dass die Lasteinleitungsvorrichtung auf der von dem Faserverbundwerkstück abgewandten Seite teilweise und nach links hin vollständig umschließt und so die Lasteinleitungsvorrichtung in zwei Raumrichtungen fixieren kann. Durch Fixieren der Dichtung kann die Lasteinleitungsvorrichtung in zwei Raumrichtungen fixiert werden. Bei Anordnung derartiger Dichtungen an vier Seiten kann die Lasteinleitungsvorrichtung in alle Raumrichtungen so fixiert und auch gegen den Injektionsdruck fixiert werden, dass sie unter dem Injektionsdruck in einer durch die Dichtung definierten Position fixiert ist.

Die unterste Darstellung zeigt einen Rahmen, der die Lasteinleitungsvorrichtung auf der von dem Faserverbundwerkstück abgewandten Seite teilweise und nach links hin vollständig umschließt und an dem eine Dichtung fixiert ist, dass die Ausbreitung des Klebstoffs begrenzt. Bei Anordnung derartiger Verbindung aus Rahmen und Dichtungen an vier Seiten kann die Lasteinleitungsvorrichtung in alle Raumrichtungen so fixiert und auch gegen den Injektionsdruck fixiert werden, dass sie unter dem Injektionsdruck in einer durch die Dichtung definierten Position fixiert ist.

Figur 4 veranschaulicht rechts beispielhaft unterschiedliche Ausführungen von Rahmen mit aufblasbaren Dichtelementen, jeweils im aufgeblasenen Zustand, die insbesondere umlaufend um die Kontur der Klebefläche und/der Lasteinleitungsvorrichtung angebracht werden. Gezeigt sind immer ein Faserverbundwerkstück (unten), eine Lasteinleitungsvorrichtung (oben), Klebstoff (zwischen Faserverbundwerkstück und Lasteinleitungsvorrichtung) sowie ein Rahmen mit einer aufgeblasenen Dichtung. Dabei kann sich die Dichtung nur zwischen Faserverbundwerkstück und Lasteinleitungsvorrichtung (zweite Abbildung von unten) oder auch neben der Lasteinleitungsvorrichtung (unterste Abbildung) oder nur neben der Lasteinleitungsvorrichtung und Kavität (oberste Abbildung) oder auch nur angrenzend an die Kavität (zweite Abbildung von oben und mittlere Abbildung) erstrecken.

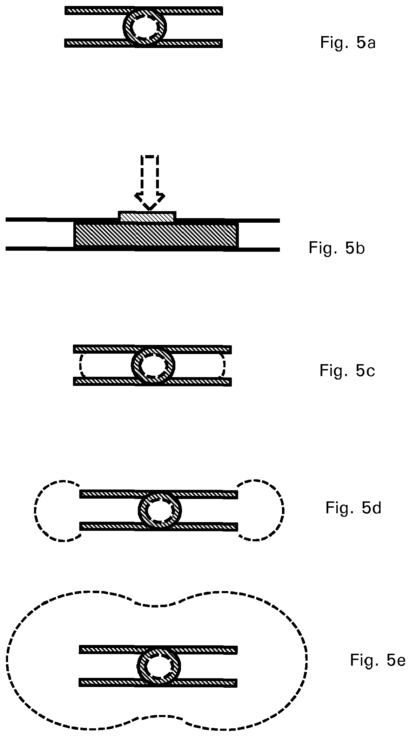

Figur 5a veranschaulicht eine Ausführungsform eines Abstandshalters, der auch zur Beeinflussung oder Leitung der Klebstoffausbreitung verwendet werden kann. Ein solche kann, wie hier exemplarisch gezeigt, aus aus zwei länglichen Stäben, hier gerade und parallel gezeigt, und mindestens einem damit verbundenen Verbindungselement, hier ein Ring, der auf die Stäbe aufgelegt mit diesen verbunden ist, bestehen. Mit Vorteil wird der Abstandshalter durch Einlegen in eine Aussparung im Lasteinleitungselement, insbesondere einer Injektionsöffnung zumindest teilweise oder vollständig in seiner Lage und/oder Orientierung fixiert. Zur weiteren oder vollständigen Fixierung kann er auch an die Lasteinleitungsvorrichtung in mehr eine Richtung angrenzend angeordnet werden/sein.

Fig. 5b veranschaulicht die Lage zwischen zwischen Faserverbundwerkstück (unten) und Lasteinleitungsvorrichtung (oben) und des Rings in einer Injektionsöffnung. Der Pfeil veranschaulicht, dass durch den Ring Klebstoff injiziert wird.

Figur 5c bis 5e veranschaulichen die unbegrenzte Ausbreitung des Klebstoffs (gestrichelte Linien) während der Injektion. Zunächst ist die Ausbreitung durch die Stäbe in zwei Richtungen behindert (Figur 5c), anschließend umfließt der Klebstoff die Hindernis, die durch den Abstandshalter bzw. dessen Stäbe gebildet werden. Danach kann sich der Klebstoff in der Kavität in alle Richtungen frei ausbreiten (Figur 5e). Die Kontur wird durch die gestrichelten Linien und Umrisse der Stäbe gebildet. In Figur 5c wird die Kontur durch die gestrichelten Linien (rechts und links) und die dazwischen liegenden Abschnitte der Innenseiten der Stäbe gebildet. In Figur 5d wird die Kontur durch die gestrichelten Linien (rechts und links) und die Innenseiten der Stäbe gebildet. In Figur 5e wird die Kontur durch die gestrichelte Linie und die Kontur der umflossenen Stäbe gebildet.

Figur 6 zeigt eine Lasteinleitungsvorrichtung zur U-förmigen Umschließung eines Faserverbundwerkstoffs wie in Fig. 2 gezeigt. Sie weist drei ebene Klebeteilflächen auf. Die endständigen oder seitlichen Seiten der Lasteinleitungsvorrichtungen, von denen eine in der senkrechten Aufsicht auf die Klebeteilfläche in Fig. 7 gezeigt ist, weist ein Verhältnis von Kontur zum Quadrat zu Fläche von M = 57,9 auf. Betrachtet man die in Fig. 6 gezeigte Lasteinleitungsvorrichtung insgesamt erhält man M = 76,5. Bei Betrachtung einer Seiten, wie in Figur 7 gezeigt, aber ohne die untere (Biege-)Kante, die mit dem Rest der Lasteinleitungsvorrichtung verbunden ist, als Kontur anzusehen, erhält man M = 42,1. Dazu ist die umlaufende Kantenlänge summiert worden mit der Kantenlänge der Aussparungen, das Ergebnis wurde quadriert und durch die Fläche der Seite der Lasteinleitungsvorrichtung wie in Fig. 7 zu erkennen geteilt. Verklebt wird die Lasteinleitungsvorrichtung aus Figur 6 nach Anordnung an einem Faserverbundwerkstoff, insbesondere einem wie in Figur 2 gezeigt, durch Injektion durch die Injektionsöffnungen bis die jeweils injizierten Klebstoffmengen eine Kontur ausbilden, die mit den Rundungen der Lasteinleitungsvorrichtung identisch sind. Die Anordnung kann durch Halten mittels eines Roboterarms erfolgen. Beide Seiten der Lasteinleitungsvorrichtung, von denen eine in der Figur 7 gezeigt ist, weisen dann nach den Injektionen auf jeweils einer Klebeteilfläche pro Seite vier voneinander getrennte Bereiche auf, an denen sie mit Klebstoff verklebt sind. Diese Bereiche sind durch die Stege, die bei der Berechnung der Maßzahl mit einfließen, verbunden. In der hier gezeigten Ausbildung sind die Stege auch Teil der Klebeteilfläche, auch wenn an ihnen keine Verklebung vorgenommen wird. Betrachtet man aber die Maßzahl des Klebstoffes pro Seite wären pro Seite lediglich die vier sich durch die vier unbehinderten Injektionen ergebenden Kreise zu berücksichtigen, dazu wäre die Kontur der vier Kreise zu addieren, das Ergebnis zu quadrieren. Dies wäre dann durch eine Zahl zu teilen die sich durch die Addition der Flächen der vier Kreise und Quadrieren des Ergebnisses ergibt Betrachtet man dies für die gesamte Lasteinleitungsvorrichtung wäre entsprechend mit den acht Kreisen zu verfahren.

Bezugszeichenliste

1    Lasteinleitungsvorrichtung
2    Faserverbundwerkstück aus Faserverbundwerkstoff
3    Dichtung
4    Kavität
5    Klebstoff
6    Klebstoffausbreitung
7    Sicke
8    Abstandshalter
9    Klebeteilfläche
10    Entlüftungsöffnung
11    Höhe der Kavität
12    Injektionsöffnung

**Patentansprüche**

**1.** Verfahren zur Verbindung mindestens eines Faserverbundwerkstücks, insbesondere eines Längsträgers eines Fahrzeuges, mit einer Lasteinleitungsvorrichtung, insbesondere einer metallischen Lasteinleitungsvorrichtung, beinhaltend:

a. Bereitstellen mindestens eines Faserverbundwerkstücks, und Bereitstellen einer Lasteinleitungsvorrichtung aufweisend mindestens eine Klebefläche,

b. Positionieren der Lasteinleitungsvorrichtung relativ zu dem mindestens einen Faserverbundwerkstück so, dass sich mindestens eine Kavität zwischen dem mindestens einen Faserverbundwerkstück und der mindestens einen Klebefläche der Lasteinleitungsvorrichtung ergibt, und Fixieren der Anordnung von Faserverbundwerkstück und Lasteinleitungsvorrichtung, derart, dass die Anordnung geeignet ist, einem ersten Druck in der Kavität für mindestens eine erste Zeitspanne und/oder einer ersten Injektionsbelastung durch Injizieren von Klebstoff in die Kavität, insbesondere ohne dauerhafte und/oder temporäre Veränderung der Anordnung, zu widerstehen,

c. Injizieren von Klebstoff mit mindestens einem zweiten Druck in mindestens einer zweiten Zeitspanne in die Kavität, insbesondere durch eine Aussparung oder eine Mehrzahl von Aussparungen, insbesondere Bohrungen in der Lasteinleitungsvorrichtung,

i. bis der Klebstoff eine, insbesondere vorgesehene, Ausbreitung erreicht, die, insbesondere zumindest teilweise, insbesondere an mindestens 10% der Kontur der Klebstoffausdehnung in der Kavität und/oder der Kontur Lasteinleitungsvorrichtung, durch die Kontur der Lasteinleitungsvorrichtung und/oder in der Lasteinleitungsvorrichtung angeordnete Kontrollaussparungen, insbesondere Bohrungen, definiert ist, dieser entspricht und/oder zu dieser parallel ist, insbesondere in Aufsicht auf den Faserverbundwerkstoff, und/oder

ii. bis eine Klebstoffmenge injiziert ist, die zu einer, insbesondere vorgesehenen, Ausbreitung des Klebstoffs führt, die, insbesondere zumindest teilweise, insbesondere an mindestens 10% der Kontur der Klebstoffausdehnung in der Kavität und/oder der Kontur Lasteinleitungsvorrichtung, durch die Kontur der Lasteinleitungsvorrichtung und/oder in der Lasteinleitungsvorrichtung angeordnete Kontrollaussparungen, insbesondere Bohrungen, definiert ist, dieser entspricht und/oder zu dieser parallel ist, insbesondere in Aufsicht auf den Faserverbundwerkstoff, und/oder

iii. wobei die Ausbreitung des Klebstoffs zwischen Faserverbundwerkstoff und Lasteinleitungsvorrichtung, insbesondere nicht durch Lasteinleitungsvorrichtung, Faserverbundwerkstoff und/oder andere Mittel, behindert und/oder begrenzt wird

und bis die Kavität zumindest zu 50% mit Klebstoff gefüllt ist, wobei der mindestens eine zweite Druck den ersten Druck und die zweite Zeitspanne die erste Zeitspanne nicht übersteigt oder die Belastung durch das Injizieren die erste Injektionsbelastung nicht übersteigt und das Fixieren der Anordnung von Faserverbundwerkstück und der Lasteinleitungsvorrichtung zumindest für die Dauer des Injizierens durch Festlegen der Lasteinleitungsvorrichtung, zumindest in Bezug auf die Kräfte, die durch die Injektion ausgeübt werden, relativ zum Faserverbundwerkstück durch externe Mittel, insbesondere mindestens einen Roboterarm, mindestens ein Spannmittel und/oder mindestens eine Halteklammer, mindestens ein Haltemittel und/oder mindestens ein Andruckmittel, erfolgt.

2. Verfahren zur Verbindung mindestens eines Faserverbundwerkstücks, insbesondere eines Längsträgers eines Fahrzeuges, mit einer Lasteinleitungsvorrichtung, insbesondere einer metallischen Lasteinleitungsvorrichtung, beinhaltend:

a. Bereitstellen mindestens eines Faserverbundwerkstücks, und Bereitstellen einer Lasteinleitungsvorrichtung aufweisend mindestens eine Klebefläche,

b. Positionieren der Lasteinleitungsvorrichtung relativ zu dem mindestens einen Faserverbundwerkstück unter Verwendung mindestens eines Dichtmittels so, dass sich mindestens eine Kavität mit einem Kavitätsvolumen zwischen dem mindestens einen Faserverbundwerkstück und der mindestens einen Klebefläche der Lasteinleitungsvorrichtung ergibt, wobei die Kavität n Bereiche aufweist, an denen das Kavitätsvolumen nicht durch die mindestens eine Klebefläche der Lasteinleitungsvorrichtung und die mindestens eine Klebefläche des mindestens einen Faserverbundwerkstücks begrenzt ist, wobei n gleich eins oder größer ist und die Länge, insbesondere senkrecht zur jeweiligen kürzesten Verbindungslinie zwischen Faserverbundwerkstück und Klebefläche der Lasteinleitungsvorrichtung gemessen, der n Bereiche zusammen mindestens 5 cm beträgt, und so, dass die n Bereiche zumindest über 90% der gemeinsamen Länge der n Bereiche vom mindestens einen Dichtmittel verschlossen sind und das mindestens eine Dichtmittel in Kontakt mit dem mindestens einen Faserverbundwerkstück und/oder der Lasteinleitungsvorrichtung, insbesondere mit der mindestens einen Klebefläche der Lasteinleitungsvorrichtung, ist und/oder mit dem mindestens einen Faserverbundwerkstück und/oder der Lasteinleitungsvorrichtung einteilig ausgebildet ist und Fixieren der Anordnung von Faserverbundwerkstück und Lasteinleitungsvorrichtung, derart, dass die Anordnung geeignet ist, einem ersten Druck in der Kavität für mindestens eine erste Zeitspanne und/oder einer ersten Injektionsbelastung durch Injizieren von Klebstoff in die Kavität ohne Trennen und insbesondere ohne bleibende Veränderung der Anordnung, zu widerstehen,

c. Injizieren von Klebstoff mit mindestens einem zweiten Druck in mindestens einer zweiten Zeitspanne in die Kavität, bis die Kavität zumindest zu 50% mit Klebstoff gefüllt ist, wobei der mindestens eine zweite Druck den ersten Druck und die zweite Zeitspanne die erste Zeitspanne nicht übersteigt oder die Belastung durch das Injizieren die erste Injektionsbelastung nicht übersteigt und das Fixieren der Anordnung von Faserverbundwerkstück und der Lasteinleitungsvorrichtung durch Ausüben einer das Dichtmittel komprimierenden Kraft auf die Lasteinleitungsvorrichtung und/oder das Faserverbundwerkstück zumindest für die Dauer des Injizierens durchgeführt wird und/oder das Fixieren durch Festlegen, zumindest in Bezug auf die Kräfte, die durch die Injektion ausgeübt werden, der Lasteinleitungsvorrichtung relativ zum Faserverbundwerkstück durch externe Mittel, insbesondere mindestens einen Roboterarm, mindestens ein Spannmittel und/oder mindestens eine Halteklammer, mindestens ein Haltemittel und/oder mindestens ein Andruckmittel, erfolgt.

3. Verfahren nach Anspruch 1 oder 2, wobei die Verwendung von Dichtmittel durch Einbringen von Dichtmittel erfolgt, wobei das Einbringen von Dichtmittel durch Anordnen mindestens einer länglichen elastischen Dichtung entlang der Außenkontur der mindestens einen Klebefläche der Lasteinleitungsvorrichtung und/oder entlang der Außenkontur der Lasteinleitungsvorrichtung durchgeführt wird, insbesondere durch Anordnen der mindestens einer länglichen elastischen Dichtung und eines die mindestens eine länglichen elastischen Dichtung, insbesondere in deren Querschnitt, an mindestens einer, insbesondere an zwei oder drei Seiten stabilisierenden und/oder umgebenden Rahmen.

4. Verfahren nach einem der vorstehenden Ansprüche, wobei die längliche elastische Dichtung in einem Rahmen aufgenommen und/oder fixiert ist und/oder die längliche elastische Dichtung aufblasbar ausgebildet ist und vor der Injektion aufgeblasen wird und/oder wobei die längliche elastische Dichtung und der Klebstoff so gewählt werden, dass sich der Klebstoff nicht mit der Dichtung verbindet und/oder wobei der Rahmen und/oder die Dichtung die Fixierung bewirkt und/oder unterstützt und/oder durch die Fixierung mittels der Lasteinleitungsvorrichtung gehalten wird und/oder wobei die Dichtung und/oder der Rahmen als Abstandshalter zwischen Lasteinleitungsvorrichtung und Faserverbundwerkstoff dient und/oder wobei mindestens ein Abstandshalter zur Beeinflussung der Klebstoffausbreitung genutzt wird.

5. Verfahren nach einem der vorstehenden Ansprüche, wobei zum Positionieren mindestens ein Abstandshalter verwendet wird, der zwischen dem mindestens einen Faserverbundwerkstück und der mindestens einen Lasteinleitungsvorrichtung angeordnet ist.

6. Verfahren nach einem der vorstehenden Ansprüche, wobei während des Injizierens eine Entlüftung der Kavität ermöglicht und/oder durchgeführt wird, insbesondere durch eine der mindestens einen nicht verschlossenen Teile der mindestens n Bereiche.

7. Verfahren nach einem der vorstehenden Ansprüche, wobei nach dem Injizieren die n Bereiche vollständig verschlossen werden, insbesondere mit mindestens einem Stopfen.

8. Verfahren nach einem der vorstehenden Ansprüche, wobei das Injizieren stattfindet, während in der Kavität im noch nicht durch Klebstoff gefüllten Volumen ein Druck von weniger als 20 bar herrscht und/oder vor Beginn ein Druck von weniger als 500 mbar herrscht.

9. Verfahren nach einem der vorstehenden Ansprüche, wobei durch das Injizieren Luft in der Kavität und/oder in einer mit der Kavität luftdurchlässig verbundenen Entlüftungskavität, insbesondere der Lasteinleitungsvorrichtung, komprimiert wird.

10. Verfahren nach einem der vorstehenden Ansprüche, wobei mindestens drei Öffnungen der Kavität vorgesehen sind und das Injizieren als Staffelinjektion durchgeführt wird, so dass wenn eine Fließfront des Klebstoffs, der durch eine erste Öffnung injiziert wird eine zweite Öffnung erreicht und/oder einen Bereich mit einer Ausdehnung von bis zu 50 mm um die zweite der Öffnung erreicht, die Injektion durch die zweite Öffnung und/oder einer dritte Öffnung fortgesetzt wird bis der durch die zweite Öffnung injizierte Klebstoff eine dritte Öffnung erreicht und/oder der durch die dritte Öffnung injizierte Klebstoff die zweite Öffnung erreicht.

11. Verwendung mindestens einer länglichen elastischen Dichtung für eine Injektionsverklebung mindestens zweier Teile mittels Injizieren eines zweiten Klebstoffs mit einem Injektionsdruck, wobei die mindestens eine längliche elastische Dichtung entlang der Außenkontur der mindestens einen Klebefläche der Lasteinleitungsvorrichtung und/oder entlang der Außenkontur der Lasteinleitungsvorrichtung angeordnet wird , wobei die mindestens einer länglichen elastischen Dichtung so verwendet wird, dass das sie in Kontakt mit beiden Teilen steht und/oder kommt und bevor der zweite Klebstoff in die Kavität injiziert wird die Teile zumindest soweit fixiert, dass die Kavität und/oder die mindestens eine längliche elastische Dichtung dem Injektionsdruck, insbesondere ohne Veränderung, standhält, wobei eine das Dichtmittel komprimierenden Kraft zumindest für die Dauer des Injizierens ausgeübt wird und/oder das Fixieren durch Festlegen, zumindest in Bezug auf die Kräfte, die durch die Injektion ausgeübt werden, der Lasteinleitungsvorrichtung relativ zum Faserverbundwerkstück durch externe Mittel, insbesondere mindestens einen Roboterarm, mindestens ein Spannmittel und/oder mindestens eine Halteklammer, mindestens ein Haltemittel und/oder mindestens ein Andruckmittel, erfolgt und wobei es sich bei den mindestens zwei Teilen um mindestens ein Faserverbundwerkstück und mindestens eine Lasteinleitungsvorrichtung, insbesondere nach einem der folgenden Ansprüche 12 bis 14, handelt.

12. Lasteinleitungsvorrichtung zur Lasteinleitung in mindestens ein Faserverbundwerkstück in mit dem mindestens einen Faserverbundwerkstück verklebten Zustand, wobei die Lasteinleitungsvorrichtung mindestens eine Klebefläche zur Verklebung mit dem mindestens einen Faserverbundwerkstück mittels Klebstoff aufweist und **dadurch gekennzeichnet ist, dass** die Lasteinleitungsvorrichtung mindestens eine Vorrichtung zur Injektion von Klebstoff durch die Lasteinleitungsvorrichtung und ihre Klebefläche hindurch aufweist und die Geometrie der Lasteinleitungsvorrichtung so ausgebildet ist, dass bei Anordnung der Klebefläche über der Oberfläche des Faserverbundwerkstücks in einem Abstand zwischen 1 und 15 mm bei Injektion des Klebstoffes durch die mindestens eine Vorrichtung zur Injektion von Klebstoff, der Klebstoff sich so zwischen Lasteinleitungsvorrichtung und Faserverbundwerkstück verteilt, dass seine Kontur sich über mindestens 10%, insbesondere mindestens 50%, der Erstreckung der Kontur der Lasteinleitungsvorrichtung in Aufsicht auf die Oberfläche des Faserverbundwerkstücks mit der Kontur der Lasteinleitungsvorrichtung deckt und/oder zu dieser parallel verläuft ohne in seiner Ausbreitung zwischen zwischen Lasteinleitungsvorrichtung und Faserverbundwerkstück durch die Lasteinleitungsvorrichtung und/oder andere Mittel begrenzt zu werden und/oder die Geometrie der Lasteinleitungsvorrichtung so ausgebildet ist, dass die Kontur der Lasteinleitungsvorrichtung oder mindestens einer ihrer Seiten und/oder Klebeteilflächen, zum Quadrat im Verhältnis zu seiner/ihrer Fläche größer als 18, insbesondere größer als 25, insbesondere größer als 50, insbesondere größer als 115, ist.

13. Lasteinleitungsvorrichtung nach dem vorstehenden Anspruch wobei die Lasteinleitungsvorrichtung mindestens einen Abstandhalter aufweist und/oder wobei die mindestens eine Klebefläche mindestens zwei Klebeteilflächen aufweist, die einander gegenüberliegend angeordnet sind und/oder wobei die mindestens eine Klebefläche mindestens zwei Klebeteilflächen aufweist zwischen denen die mindestens eine Klebefläche mindestens einen, insbesondere mindestens zwei, Winkel und/oder Kanten aufweist und/oder einschließt, insbesondere jeweils mit Winkelweiten zwischen 60 und 120° und/oder insbesondere um parallele Achsen und/oder insbesondere mit gegengleichen Drehrichtungen und/oder insbesondere in Form von Nachbarwinkeln.

14. Lasteinleitungsvorrichtung nach einem der vorstehenden Ansprüche, wobei mindestens eine Klebefläche mit mindestens einer Klebeteilflächen so in Verbindung stehende und so ausgebildete Entlüftungskavität beinhaltet ist, dass Luft von der mindestens einen Klebeteilfläche in die Entlüftungskavität gedrückt werden und in dieser komprimiert werden kann, insbesondere ab einen Druck an der Klebefläche, der über Normaldruck und/oder dem Druck in der Entlüftungskavität und/oder maximal 100mbar über Normaldruck und/oder dem Druck in der Entlüftungskavität liegt und/oder bis zu einem Druck, von mindestens 5 bar.

15. System beinhaltend mindestens ein Faserverbundwerkstück und eine Lasteinleitungsvorrichtung, insbesondere nach einem der vorstehenden Ansprüche 12 bis 14, zur Lasteinleitung in das mindestens ein Faserverbundwerkstück, wobei das mindestens eine Faserverbundwerkstück und die Lasteinleitungsvorrichtung durch eine Verklebung mit einem Klebstoffvolumen verbunden sind, wobei die Oberfläche des Klebstoffvolumens an einem ersten Teil der Oberfläche des Klebstoffvolumens von dem mindestens einen Faserverbundwerkstück und an einem zweiten Teil der Oberfläche des Klebstoffvolumens von der Lasteinleitungsvorrichtung teilweise begrenzt ist und an einem dritten Teil der Oberfläche frei liegt umgeben ist und wobei der dritte Teil mindestens 50%, insbesondere mindestens 80%, eines Differenzwerts beträgt, insbesondere im Wesentlichen oder vollständig gleich dem Differenzwert ist, wobei sich der Differenzwert aus der der Oberfläche des Klebstoffvolumens abzüglich des ersten Teils der Oberfläche des Klebstoffvolumens und abzüglich des zweiten Teils der Oberfläche des Klebstoffvolumens und insbesondere abzüglich der Oberfläche des Klebstoffvolumens, die vom Klebstoffvolumen, dem Faserverbundwerkstoff und der Lasteinleitungsvorrichtung zusammen vollständig umschlossen ist, ergibt.

1

12          12          12                          12

A           B           C                    n

Fügepartner                          Kavitätsbegrenzung

3                2          4                              3

Fig. 1

Fig. 2

Fig. 3

Fig. 4

Fig. 5a

Fig. 5b

Fig. 5c

Fig. 5d

Fig. 5e

Fig. 6

Fig. 7

**Europäisches Patentamt**
**European Patent Office**
**Office européen des brevets**

# EUROPÄISCHER RECHERCHENBERICHT

Nummer der Anmeldung

EP 19 15 5390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/241401 A1 (SMITH JONATHAN [GB] ET AL) 24. August 2017 (2017-08-24) <br> * Absatz [0050] - Absatz [0077]; Abbildungen 1-9 * <br> * Absatz [0002] - Absatz [0036] * <br> ----- | 1-15 | INV. <br> B29C65/52 <br> B29C65/54 <br> B29C65/00 <br> B29C65/78 <br> B62D27/02 <br> B62D29/00 |
| X | US 2014/241790 A1 (WOLEADER JOHN A [US] ET AL) 28. August 2014 (2014-08-28) <br> * Absatz [0037] - Absatz [0090]; Abbildungen 1-26 * <br> ----- | 1-15 | ADD. <br> B29L31/30 |

**RECHERCHIERTE SACHGEBIETE (IPC)**

B29C
B29L
B62D

Der vorliegende Recherchenbericht wurde für alle Patentansprüche erstellt

| Recherchenort | Abschlußdatum der Recherche | Prüfer |
|---|---|---|
| München | 1. Juli 2019 | Peña, Alejandro |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 15 5390

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-2019

| Im Recherchenbericht angeführtes Patentdokument | Datum der Veröffentlichung | Mitglied(er) der Patentfamilie | Datum der Veröffentlichung |
|---|---|---|---|
| US 2017241401 A1 | 24-08-2017 | CN 106715092 A<br>EP 3188895 A1<br>GB 2529186 A<br>US 2017241401 A1<br>WO 2016023555 A1 | 24-05-2017<br>12-07-2017<br>17-02-2016<br>24-08-2017<br>18-02-2016 |
| US 2014241790 A1 | 28-08-2014 | AU 2014219398 A1<br>BR 112015019975 A2<br>KR 20150120365 A<br>RU 2015127436 A<br>US 2014241790 A1<br>US 2017097031 A1<br>WO 2014130234 A1 | 06-08-2015<br>18-07-2017<br>27-10-2015<br>30-03-2017<br>28-08-2014<br>06-04-2017<br>28-08-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102015219719 A1
- EP 2888153 A1
- DE 102004001386 B3
- DE 102008058390 A1
- DE 102008058389 A1
- DE 102012012298 A1